(19) **Europäisches Patentamt / European Patent Office / Office européen des brevets**

(11) **EP 2 553 486 B1**

(12) **FASCICULE DE BREVET EUROPEEN**

(45) Date de publication et mention de la délivrance du brevet:
**03.05.2017 Bulletin 2017/18**

(21) Numéro de dépôt: **11718436.6**

(22) Date de dépôt: **30.03.2011**

(51) Int Cl.:
***G01S 5/02*** (2010.01)

(86) Numéro de dépôt international:
**PCT/FR2011/050702**

(87) Numéro de publication internationale:
**WO 2011/121234 (06.10.2011 Gazette 2011/40)**

(54) **LOCALISATION DE CAPTEURS D'UN RESEAU DE CAPTEURS SANS FIL**

ORTUNG VON SENSOREN EINES DRAHTLOSEN SENSORNETZWERKS

LOCATING OF SENSORS OF A WIRELESS SENSORS NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2010 FR 1052435**

(43) Date de publication de la demande:
**06.02.2013 Bulletin 2013/06**

(73) Titulaire: **Orange**
**75015 Paris (FR)**

(72) Inventeurs:
• **EVENNOU, Frédéric**
**F-38100 Grenoble (FR)**
• **CIBAUD, David**
**F-38120 Saint Egreve (FR)**

(74) Mandataire: **Millet, Sandrine**
**Orange**
**IMTW/OLPS/IPL/PAT**
**Orange Gardens**
**44 Avenue de la République**
**CS 50010**
**92326 Châtillon Cedex (FR)**

(56) Documents cités:
**JP-A- 2006 090 868**

• **EVENNOU F ET AL: "Map-aided indoor mobile positioning system using particle filter", WIRELESS COMMUNICATIONS AND NETWORKING CONFERENCE, 2005 IEEE NEW ORLEANS, LA, USA 13-17 MARCH 2005, PISCATAWAY, NJ, USA, IEEE, vol. 4, 13 mars 2005 (2005-03-13), pages 2490-2494, XP010791567, DOI: DOI:10.1109/WCNC.2005.1424905 ISBN: 978-0-7803-8966-3**

EP 2 553 486 B1

## Description

L'invention se rapporte au domaine des réseaux de capteurs sans fil (WSN pour "Wireless Sensor Network" en anglais), c'est-à-dire de capteurs aptes à communiquer entre eux par liaison radio.

L'invention se rapporte plus particulièrement à la localisation de capteurs d'un réseau de capteurs.

Un réseau de capteurs est composé d'une pluralité de capteurs répartis sur une zone géographique. La fonction d'un capteur est de collecter et de transmettre des données relatives à un phénomène que l'on souhaite étudier dans la zone géographique.

Il est important de pouvoir localiser les capteurs dans la zone géographique d'une part pour des raisons de maintenance et d'autre part pour situer où les données sont collectées.

Cette localisation est d'autant plus importante lorsque les capteurs sont mobiles à l'intérieur de la zone géographique.

Le document JP 2006 090868 est relatif à une méthode pour déterminer la localisation d'une pluralité de terminaux. Ce document divulgue notamment l'obtention de mesures de distances relatives entre terminaux et le calcul d'une géométrie formée par les terminaux. Ce document décrit ensuite la correction d'une position relative d'un terminal par déplacement d'un gabarit.

Le document US2009/0128412 décrit une méthode de localisation de capteurs d'un réseau de capteurs. A cet effet, chaque capteur est équipé d'un module de communication sans fil pour communiquer avec les capteurs du réseau et comporte un module de mesure de distance. Le module de mesure de distance est apte à mesurer la distance séparant le capteur des autres capteurs du réseau ou d'une partie des autres capteurs du réseau. Les distances mesurées sont ensuite transmises à un serveur de localisation qui détermine, à partir de ces mesures, la localisation absolue des capteurs du réseau.

Cette méthode nécessite la connaissance de la position absolue de plusieurs capteurs, généralement trois. Ces capteurs, appelés "capteurs ancre" permettent au serveur de localisation de déterminer la position absolue des autres capteurs en fonction des mesures de distance reçues.

Un capteur ancre est par exemple un capteur fixe dont la position est connue ou un capteur comportant un module de type GPS (pour "Global Positioning System") ou encore un capteur comportant un module de localisation d'un autre type apte à déterminer la position du capteur.

Pour différentes raisons, il n'est pas toujours possible d'avoir un nombre suffisant de capteurs ancre pour localiser les autres capteurs du réseau.

Ces raisons sont par exemple des contraintes d'installations liées au site ou encore des problèmes de consommation d'énergie.

Par exemple, dans le cas d'une application de localisation d'un ensemble de pompiers évoluant sur un site d'intervention pour laquelle chaque pompier est équipé d'un capteur, les capteurs sont tous mobiles. Il n'existe pas de capteur fixe. L'installation, sur les capteurs, d'un module de localisation capable de déterminer leur position et de renvoyer les coordonnées déterminées, est coûteuse.

Il existe donc un besoin d'une solution simple et peu coûteuse pour localiser la position de capteurs d'un réseau de capteurs ne nécessitant pas l'utilisation de capteurs ancre.

L'invention vient améliorer la situation.

A cet effet, l'invention se rapporte à un procédé de localisation de capteurs d'un réseau de capteurs aptes à communiquer entre eux par liaison radio, selon la revendication 1. Ce procédé de localisation comprend les étapes suivantes :

- réception, en provenance de capteurs du réseau de capteurs, de mesures de distances relatives entre des capteurs du réseau;
- calcul d'une géométrie du réseau de capteurs à partir des mesures de distance reçues; ladite géométrie comprenant des noeuds représentatifs de capteurs du réseau de capteurs;
- détermination d'une position de ladite géométrie dans un plan d'environnement prédéfini du réseau de capteurs, ladite position prenant en compte des contraintes liées audit plan, et d'au moins une position absolue d'au moins un capteur du réseau en fonction de la position de la géométrie.

La position absolue est ainsi obtenue par déplacement de la géométrie dans le plan d'environnement pour qu'elle s'insère dans ce plan en tenant compte des contraintes du plan. Les contraintes liées au plan d'environnement telles que des positions autorisées ou interdites, des trajectoires autorisées pour les capteurs permettent d'obtenir une localisation de la géométrie sur le plan d'environnement. Ainsi, il n'est pas nécessaire d'utiliser des capteurs ancre.

Selon un mode de réalisation particulier du procédé de localisation, les contraintes sont spécifiées dans un graphe d'environnement comprenant un ensemble de positions absolues possibles pour un capteur dans le plan d'environnement. Le graphe d'environnement caractérise les contraintes du plan d'environnement.

Les contraintes sont par exemple des positions autorisées pour les capteurs. Le graphe d'environnement permet une représentation simple et complète de l'ensemble des contraintes.

Selon une caractéristique particulière du procédé de localisation, l'étape de détermination par ancrage comprend :

- une étape de sélection d'un noeud de référence parmi les noeuds de la géométrie;
- une étape de sélection de points d'ancrage parmi les positions absolues du graphe d'environnement;

- une étape de détermination d'un premier vecteur de déplacement et d'un deuxième vecteur de déplacement associé, par point d'ancrage, le premier vecteur de déplacement étant calculé en fonction de la distance entre ledit noeud de référence et le point d'ancrage considéré;
- une étape de choix d'un premier vecteur de déplacement et d'un deuxième vecteur de déplacement associé en fonction des premier et deuxième vecteurs déterminés et en fonction d'un premier critère;
- une étape d'application du premier vecteur de déplacement à l'ensemble des noeuds et d'application du deuxième vecteur de déplacement aux noeuds de la géométrie autres que le noeud de référence.

Le premier vecteur de déplacement permet de déterminer la position absolue du noeud de référence. Le deuxième vecteur de déplacement permet de déterminer la position des autres noeuds tout en conservant la géométrie.

Le nombre de points d'ancrage sélectionnés est un paramètre qui permet de déterminer un compromis entre la précision souhaitée et le nombre de calculs effectués. Le choix de ce paramètre permet une adaptation simple et rapide du procédé au réseau de capteurs utilisé.

Ce type de filtrage, appelé filtrage particulaire, permet une localisation précise.

L'utilisation d'un graphe d'environnement permet de déterminer la position attendue des capteurs et de limiter ainsi le nombre de points d'ancrage à utiliser.

Selon un mode de réalisation particulier du procédé de localisation, un premier vecteur de déplacement et un deuxième vecteur de déplacement associé sont choisis parmi les premiers et deuxièmes vecteurs déterminés.

Les différentes configurations possibles sont évaluées et une des configurations est retenue.

Selon un mode de réalisation particulier du procédé de localisation, le premier critère est un score de concordance entre une position absolue des noeuds obtenue par application d'un premier et d'un deuxième vecteurs déterminés et le graphe d'environnement, ledit score de concordance correspondant à la somme de distances entre les noeuds et des points du graphe d'environnement.

Ce critère permet d'obtenir une localisation précise.

Selon un autre mode de réalisation particulier du procédé de localisation, le premier vecteur de déplacement choisi est déterminé en fonction de la distance entre le noeud de référence et un barycentre associé aux premiers vecteurs de déplacement déterminés et le deuxième vecteur de déplacement associé choisi est choisi en fonction d'un angle de rotation moyen.

Le moyennage entre plusieurs positions considérées comme vraisemblables permet d'augmenter la stabilité de la position absolue.

Selon un autre mode de réalisation particulier du procédé de localisation, des valeurs de pondération étant associées aux points d'ancrage, les premier et second vecteurs de déplacement sont choisis en fonction des valeurs de pondération.

Selon un autre mode de réalisation particulier du procédé de localisation, le procédé comporte en outre une étape de mise à jour d'au moins une valeur de pondération des points d'ancrage.

Selon un autre mode de réalisation particulier du procédé de localisation, les étapes de réception, de calcul d'une géométrie et de détermination absolue sont réitérées avec les valeurs de pondération mises à jour.

Ainsi, lorsque plusieurs itérations du procédé sont réalisées, la précision de l'estimation de la position absolue est augmentée.

La réitération permet une réévaluation de la position des capteurs et permet ainsi une localisation en temps réel des capteurs.

Selon un autre mode de réalisation particulier du procédé de localisation, le premier vecteur de déplacement est un vecteur de translation et le deuxième vecteur de déplacement est un vecteur de rotation et/ou de symétrie orthogonale

Selon un autre mode de réalisation particulier du procédé de localisation, la détermination du second vecteur de déplacement pour un point d'ancrage comprend:

- une étape de positionnement du noeud de référence sur ledit point d'ancrage ;
- une étape de calcul d'un score d'ancrage représentatif d'une distance entre les noeuds et le graphe d'environnement pour plusieurs angles de rotation des noeuds autour du noeud de référence et/ou par symétrie ;
- une étape de sélection d'un score d'ancrage parmi les scores obtenus et de l'angle de rotation

Selon un autre mode de réalisation particulier, le procédé de localisation comprend en outre une étape de sélection d'une information relative à la position absolue déterminée pour un capteur et une étape d'émission vers ledit capteur de ladite information

L'invention concerne également un dispositif de localisation de capteurs d'un réseau de capteurs aptes à communiquer entre eux par liaison radio, selon la revendication 12. Ce dispositif de localisation comprend :

- des moyens de réception, en provenance de capteurs du réseau de capteurs, de mesures de distances relatives entre des capteurs du réseau;
- un module de calcul d'une géométrie relative du réseau de capteurs à partir des mesures de distance reçues; ladite géométrie comprenant des noeuds représentatifs de capteurs du réseau de capteurs;
- un module de détermination d'une position de ladite géométrie dans un plan d'environnement prédéfini du réseau de capteurs, ladite position prenant en compte des contraintes liées audit plan et d'au moins une position absolue d'au moins un capteur du réseau en fonction de la position de la géométrie.

D'autres particularités et avantages de la présente invention apparaitront dans la description suivante de modes de réalisation donnés à titre d'exemples non limitatifs, en référence aux dessins annexés, dans lesquels :

- la figure 1 est un schéma illustrant un système de localisation selon un mode de réalisation de l'invention,
- la figure 2 illustre un exemple de graphe d'environnement selon un mode de réalisation de l'invention,
- la figure 3 est un organigramme illustrant les principales étapes d'un procédé de localisation;
- la figure 4 illustre un exemple de graphe de positionnement selon un mode de réalisation de l'invention,

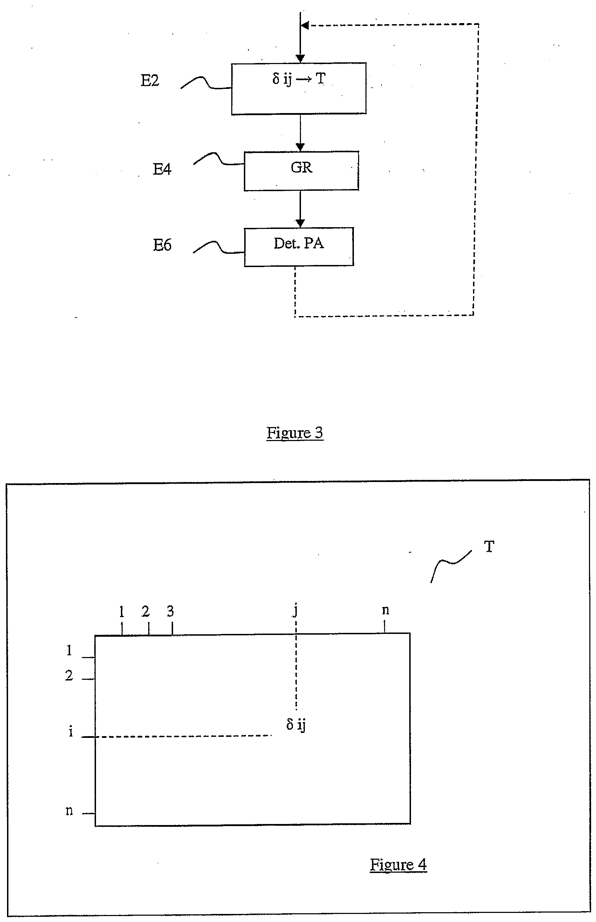

- la figure 4 est un organigramme illustrant les principales étapes d'un procédé de localisation;

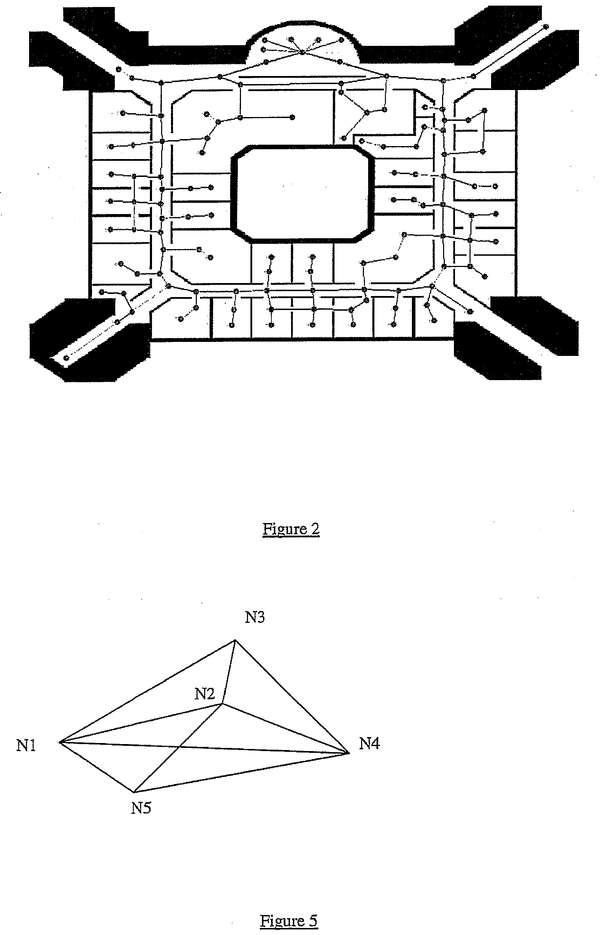

- la figure 5 illustre un exemple de table contenant les mesures de distances en provenance des capteurs, selon un mode de réalisation de l'invention,

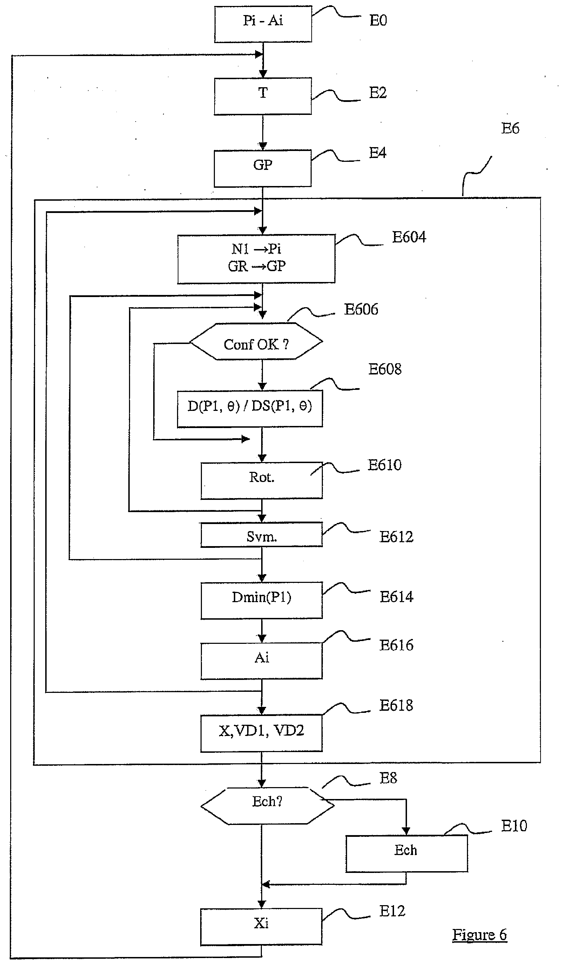

- la figure 6 est un organigramme illustrant de façon détaillée les différentes étapes d'un procédé de localisation mis en oeuvre dans un système de localisation selon un mode de réalisation de l'invention,

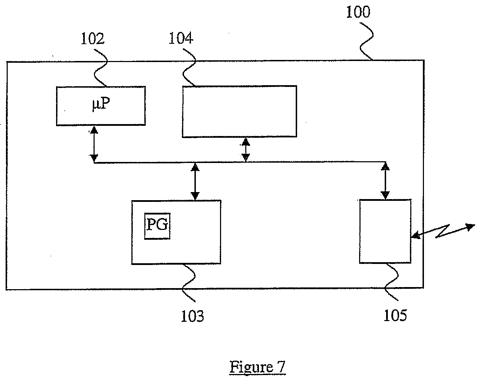

- la figure 7 est un schéma bloc représentant un dispositif apte à réaliser les étapes d'un procédé de localisation selon un mode de réalisation de l'invention.

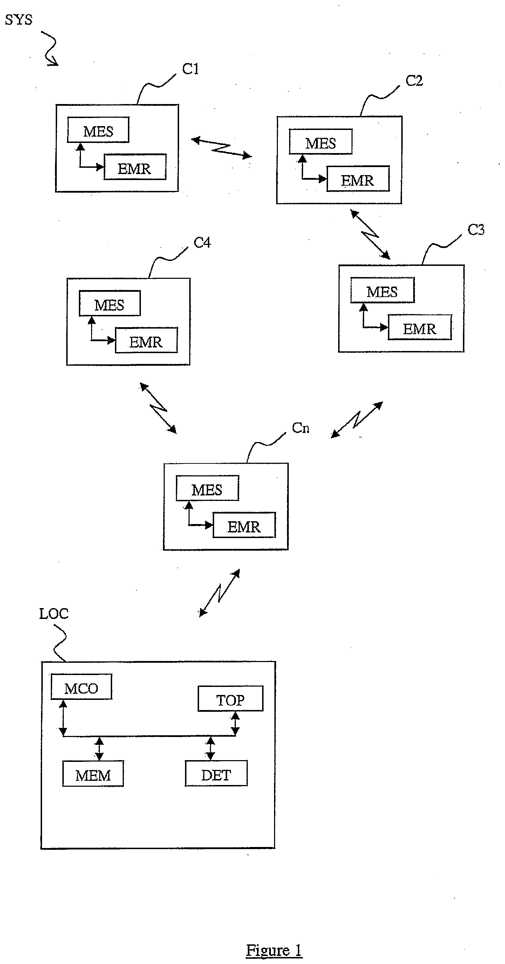

Un mode de réalisation de l'invention va maintenant être décrit en référence aux figures 1 à 5.
En référence à la figure 1, un système SYS comprend N capteurs C1, C2, C3...Cn et un dispositif de localisation LOC.
Les N capteurs forment un réseau de capteurs.
Les capteurs C1, C2, C3... comportent un module de mesure MES apte à mesurer la distance le séparant des capteurs voisins et un module d'émission/réception COM apte à transmettre les distances mesurées soit à un capteur voisin, soit au dispositif de localisation LOC au moyen d'une liaison sans fil, par exemple une liaison de type WIFI ou une liaison de type Zigbee ou Wavenis.
De façon connue, les technologies Zigbee ou Wavenis sont des technologies basse consommation.
Les mesures réalisées par un capteur sont transmises au module de LOC soit directement, soit par l'intermédiaire d'un ou plusieurs capteurs.
A titre d'alternative, les mesures réalisées par un capteur sont transmises à un module de transmission (non représenté), appelé généralement "puits", par l'intermédiaire d'un ou plusieurs capteurs. Le module de transmission est apte à retransmettre les données reçues au module de localisation LOC par une liaison filaire ou non filaire.
Les capteurs C1, C2, C3...Cn sont également aptes à retransmettre une mesure de distance reçue d'un autre capteur.
A titre d'alternative, les capteurs C1, C2, C3...Cn sont également aptes à effectuer des mesures telles que des mesures de relevage de compteur et à les retransmettre.
Le dispositif de localisation LOC comporte un module de communication MCO apte à recevoir des mesures de distances relatives en provenance des capteurs, un module de géométrie TOP et un module de détermination DET de la position absolue d'un capteur.
Le dispositif de localisation LOC comporte également une mémoire MEM dans laquelle est enregistré un plan d'environnement PE.
Dans le mode de réalisation décrit, le plan PE est un plan d'un bâtiment.
A titre d'alternative, le plan P est par exemple une carte routière ou un plan de ville.
La mémoire MEM comporte également un graphe d'environnement GP représentant les positions possibles des capteurs dans le plan PE.
Le graphe d'environnement GP comporte un ensemble de points reliés par des arcs.
La figure 2 illustre un exemple de graphe d'environnement GP pour un plan d'environnement PE.
Dans le mode de réalisation décrit, les capteurs sont mobiles dans le plan d'environnement PE.
A titre d'alternative, certains capteurs sont fixes.
Un premier mode de réalisation du procédé de gestion de l'invention mis en oeuvre dans le système SYS va maintenant être décrit en référence aux figures 3 à 5.
En référence à la figure 3, lors d'une étape E2, le module de communication MCO du dispositif de localisation LOC reçoit des mesures de distances en provenance des N capteurs C1, C2, C3...Cn. Ces mesures constituent un premier ensemble de mesures.
Les distances mesurées sont enregistrées au fur et à mesure de leur réception dans une table T de la mémoire MEM du dispositif de localisation. Comme illustré sur la figure 4, la table T comporte N lignes et N colonnes. Un élément $\delta_{ij}$ de la table T, se situant à la ligne i et à la colonne j, correspond à la distance relative entre le capteur i et le capteur j mesurée par le capteur Ci.
L'étape E2 est suivie d'une étape E4 lors de laquelle le module de géométrie TOP du dispositif de localisation LOC calcule une géométrie relative du réseau de capteurs à partir des mesures de distance reçues et enregistrées dans la table T.
Par exemple, la géométrie est calculée par utilisation de l'algorithme MDS (pour "Multidimensional Scaling").
A titre d'alternative, l'algorithme MDS-MAP est utilisé.
Les algorithmes MDS et MDS-MAP sont par exemple décrits dans le document "Sensor Network Localization from local Connectivity : performance analysis for the MDS-MAP Algorith", August 2009 de S. Oh, A. Karbasi, A. Montanari.

La géométrie obtenue lors de l'étape E4 se présente sous la forme d'un graphe de positionnement GR.

La figure 5 illustre un exemple de graphe de positionnement GR pour un système SYS comprenant 5 capteurs. Les noeuds N1, N2 ...N5 représentent la position relative des capteurs les uns par rapport aux autres.

L'étape E4 est suivie d'une étape E6 lors de laquelle le module de détermination DET du dispositif de localisation LOC détermine une position absolue d'un ou plusieurs capteurs par ancrage de la géométrie calculée dans un référentiel absolu à partir de contraintes liées au plan d'environnement PE du réseau de capteurs.

L'étape de détermination E6 est par exemple réalisée par une technique de filtrage particulaire à M particules.

A titre d'alternative, l'étape de détermination E6 est réalisée par filtrage de Kalman.

Dans un mode de réalisation particulier, les étapes E2 à E6 sont réitérées. La réitération permet de prendre en compte le déplacement des capteurs dans le réseau et de les faire correspondre avec la structure de l'environnement.

Un mode détaillé de réalisation du procédé de localisation dans lequel l'ancrage est réalisé par filtrage particulaire va maintenant être décrit en référence à la figure 6

Lors d'une étape préalable E0, des particules Pi sont localisées sur le graphe d'environnement GP. Le nombre M de ces particules est choisi en fonction de l'application, de la précision souhaitée pour la localisation et des contraintes de temps de calcul. La position des particules est déterminée de façon à ce que les particules Pi soient réparties sur le graphe d'environnement GP. Chaque particule Pi est représentée par sa position Xpi sur le graphe d'environnement GP. Une valeur de pondération Ai est également associée à chaque particule Pi. Comme il est décrit dans la suite de la description, la valeur de pondération Ai représente la probabilité que la particule Pi représente un noeud de référence déterminé du réseau de capteurs. Lors de cette étape E0, les probabilités Ai sont équiprobables.

Les particules Pi représentent des points d'ancrage.

Dans l'exemple de réalisation décrit ici, le nombre M de particules est de 300 et la valeur de pondération ou probabilité Ai est de 1/300.

Egalement lors de l'étape E0, on choisit un capteur parmi l'ensemble de capteurs comme étant un capteur de référence. Ce capteur est par exemple choisi aléatoirement.

Pour l'application considérée ici de localisation de capteurs dans un bâtiment, le nombre 300 permet d'obtenir une bonne précision. Un nombre M trop petit diminue la précision. Un nombre M plus grand augmente le nombre de calculs à effectuer.

Un premier ensemble de mesures de distances relatives est enregistré dans la table T lors de l'étape E2 et un graphe de positionnement GR représentant la géométrie du réseau de capteurs est calculée lors de l'étape E4.

Le noeud N1 du graphe de positionnement GR et correspondant au capteur de référence du graphe de positionnement GR est considéré comme étant le noeud de référence.

L'étape E6 de détermination, consécutive à l'étape E4, comporte des sous étapes E604 à E618.

Lors de la sous étape E604, le graphe de positionnement GR est positionné sur le graphe d'environnement GP de façon à ce que le noeud de référence N1 soit positionné sur la particule P1. En d'autres termes, la position du noeud de référence N1 est la position X1 de la particule P1 et la position des autres noeuds du réseau est recalculée en fonction de la position du noeud N1.

Cette opération consiste en une translation du graphe de positionnement GR. Elle consiste à appliquer un vecteur de déplacement qui est un vecteur de translation, aux noeuds Ni du réseau de capteur. Ce vecteur de déplacement représente un premier vecteur de déplacement.

Lors d'une sous étape E606, la configuration obtenue est testée.

Si, suite à ce déplacement, des noeuds du graphe de positionnement GR se situent en dehors du plan d'environnement PE, la configuration est rejetée.

Sinon, c'est-à-dire si l'ensemble des noeuds du graphe de positionnement GR se situe à l'intérieur du plan d'environnement PE, une distance globale entre le graphe de positionnement GR et le graphe d'environnement GP est calculée (sous étape 608).

Par exemple, la distance globale calculée est la somme des distances entre chaque noeud Ni du graphe de positionnement GR et le graphe d'environnement GP.

La distance entre un noeud Ni et le graphe d'environnement GP est par exemple la distance entre le noeud Ni et le point du graphe d'environnement GP le plus proche.

A titre d'alternative, cette distance prend en compte des caractéristiques du plan d'environnement (contournement de murs du bâtiment par exemple).

Lors d'une étape E610, une rotation d'un angle θ du graphe de positionnement GR autour du noeud N1, c'est-à-dire de la particule P1, est ensuite effectuée.

Par exemple, l'angle θ est de 5 degrés.

Ceci revient à appliquer un deuxième vecteur de déplacement aux noeuds de la géométrie qui ne sont pas le noeud de référence. Ce deuxième vecteur de déplacement est un vecteur de rotation d'angle θ.

Les sous étapes E606 à E610 sont alors réitérées avec ce nouveau positionnement du graphe de positionnement GR.

L'étape E610 est réitérée pour tous les angles θ entre 0 et 360°.

On obtient ainsi des distances D(P1,θ) correspondant à des deuxièmes vecteurs de déplacement V(P1, θ).

Lors d'une sous étape E612, une symétrie orthogonale du graphe de positionnement GR est effectuée par rapport à un axe, par exemple vertical, passant par le noeud N1.

Les sous étapes E606 à E610 sont réitérées pour l'ensemble des valeurs d'angle θ comprises entre 0 et 360°.

On obtient ainsi des distances DS(P1,θ) correspondant à des deuxièmes vecteurs de déplacement VS(P1, θ). VS représente ici un vecteur de déplacement qui est la somme d'un vecteur de symétrie orthogonale et d'un vecteur de rotation d'angle θ.

Lors d'une étape E614, une distance Dmin(P1) est déterminée. La distance Dmin(P1) est la plus petite parmi l'ensemble des distances calculées pour la particule P1, c'est-à-dire parmi les distances D(P1, θ) et les distances DS(P1, θ).

La distance Dmin(P1) est la distance déterminée pour la particule P1 et est associée au vecteur de déplacement V(P1, θ) ou VS(P1, θ). Le vecteur V(P1, θ) ou VS(P1, θ) représente un deuxième vecteur de déplacement.

Les sous étapes E604 à E614 sont ensuite réitérées avec les (M-1) autres particules.

On obtient ainsi M distances Dmin(Pi), M premiers vecteurs de déplacement et M deuxièmes vecteurs de déplacement associés.

Lors d'une sous étape E616, la valeur de probabilité Ai associée à chaque particule Pi est recalculée. La valeur de probabilité Ai calculée est par exemple obtenue par la formule :

$$Ai = Ai \exp(-Dmin (Pi)/2\sigma^2)$$

dans laquelle σ est un seuil prédéterminé.

A titre d'alternative, une autre loi associant une probabilité en fonction de la distance entre le graphe de l'environnement et la géométrie du réseau de capteurs est utilisée.

Lors d'une étape E618, la position X la plus probable pour le noeud de référence N1 est déterminée.

Dans le mode de réalisation décrit, la position X la plus probable pour le noeud de référence N1 est le barycentre de l'ensemble des particules pondérées.

A titre d'alternative, la position la plus probable pour le noeud de référence N1 est le barycentre de l'ensemble des particules ayant une probabilité Ai supérieure à un seuil prédéterminé.

Egalement à titre d'alternative, la position X la plus probable pour le noeud de référence N1 est la position Xi pour laquelle la probabilité Ai est la plus importante parmi les probabilités Ai(Pi).

Encore à titre d'alternative, il n'est pas tenu compte des valeurs de pondération. Les valeurs de pondération Ai servent dans ce cas uniquement à la sélection des particules pour les itérations suivantes.

Egalement lors de l'étape E618, un premier vecteur de déplacement VD1 et une deuxième vecteur de déplacement VD2 sont estimés. Le premier vecteur de déplacement VD1 correspond à la translation du noeud de référence N1 entre sa position initiale et la position X. Le deuxième vecteur de déplacement VD2 correspond à la rotation du graphe de positionnement GR et éventuellement à une symétrie orthogonale appliquée.

L'étape E6 est suivie d'une étape E8 lors de laquelle on vérifie qu'il n'y a pas dégénérescence du filtre. Lors de cette étape on vérifie que l'inverse de la somme des Ai au carré reste supérieure à un seuil prédéterminé.

Si cette condition n'est pas respectée, une étape E10 d'échantillonnage est déclenchée afin de ramener les particules de probabilité Ai les plus faibles sur celles de probabilité les plus fortes.

Lors de l'étape E12, une nouvelle position Xi est calculée pour chacune des particules Pi (position tirée aléatoirement, fonction de la précédente position, et contrainte à rester sur le graphe de positionnement GR).

Dans le mode de réalisation décrit, Les étapes E2 à E12 sont ensuite réitérées avec un nouvel ensemble de mesures et en utilisant les particules restantes.

Selon un mode de réalisation choisi et représenté à la figure 7, un dispositif de localisation mettant en oeuvre un procédé de localisation selon l'invention est par exemple un ordinateur de type PC 100 qui comporte de façon connue, notamment une unité de traitement 102 équipée d'un microprocesseur, une mémoire morte de type ROM ou EEPROM 103, une mémoire vive de type RAM 104, une interface de communication 105 avec des capteurs par une liaison sans fil.

La mémoire morte 103 comporte des registres mémorisant un programme d'ordinateur PG comportant des instructions de programme adaptées à réaliser les étapes d'un procédé de localisation selon l'invention.

Lors de la mise sous tension, le programme PG stocké dans la mémoire de type EEPROM 103 est transféré dans la mémoire vive qui contiendra alors un code exécutable ainsi que des registres pour mémoriser les variables nécessaires à la mise en oeuvre d'une étape de réception, en provenance de capteurs du réseau de capteurs, de mesures de distances relatives entre des capteurs du réseau; d'une étape de calcul d'une géométrie du réseau de capteurs à partir des mesures de distance reçues, ladite géométrie comprenant des noeuds représentatifs de capteurs du réseau de capteurs; et d'une étape de détermination d'une position absolue du capteur par ancrage de la géométrie calculée dans un référentiel absolu à partir de contraintes liées à un plan d'environnement du réseau de capteurs.

De manière plus générale un moyen de stockage, lisible par un ordinateur ou par un microprocesseur, intégré ou non au dispositif, éventuellement amovible, mémorise un programme mettant en oeuvre les étapes d'un procédé de gestion selon l'invention.

**Revendications**

1. Procédé de localisation de capteurs (C1, C2...Cn) d'un réseau de capteurs aptes à communiquer entre eux par liaison radio, comprenant les étapes suivantes, mises en oeuvre par un dispositif de localisation :

réception (E2), en provenance de capteurs du réseau de capteurs, de mesures de distances ($\delta_{ij}$) relatives entre des capteurs du réseau effectuées par des capteurs du réseau de capteurs;
calcul (E4) d'une géométrie (GR) du réseau de capteurs à partir des mesures de distance reçues, ladite géométrie (GR) comprenant des noeuds (N1, N2,...) représentatifs de capteurs du réseau de capteurs;
**caractérisé en ce qu'**il comprend une étape de détermination (E6), par le dispositif de localisation, d'une position de ladite géométrie (GR) dans un plan d'environnement prédéfini (PE) du réseau de capteurs, ladite position prenant en compte des contraintes liées audit plan (PE), et d'au moins une position absolue d'au moins un capteur du réseau en fonction de la position de la géométrie (GR).

2. Procédé de localisation selon la revendication 1 dans lequel les contraintes sont spécifiées dans un graphe d'environnement (GP) comprenant un ensemble de positions absolues possibles pour un capteur dans le plan d'environnement (PE).

3. Procédé de localisation selon la revendication 2 dans lequel l'étape de détermination comprend :

une étape de sélection (E0) d'un noeud de référence (N1) parmi les noeuds de la géométrie ;
une étape de sélection de points d'ancrage (Pi) parmi les positions absolues du graphe d'environnement (GP) ;
une étape de détermination, par point d'ancrage, d'un premier vecteur de déplacement et d'un deuxième vecteur de déplacement associé audit premier vecteur de déplacement, le premier vecteur de déplacement étant calculé en fonction de la distance entre ledit noeud de référence (N1) et le point d'ancrage considéré;
une étape de choix d'un premier vecteur de déplacement (VD1) et d'un deuxième vecteur de déplacement associé (VD2) parmi les premier et deuxième vecteurs déterminés en fonction d'un premier critère prédéfini;

une étape d'application du premier vecteur de déplacement choisi (VD1) à l'ensemble des noeuds et d'application du deuxième vecteur de déplacement choisi (VD2) aux noeuds de la géométrie autres que le noeud de référence (N1).

4. Procédé de localisation selon la revendication 3 dans lequel le premier critère est un score de concordance entre une position absolue des noeuds obtenue par application d'un premier et d'un deuxième vecteurs déterminés et le graphe d'environnement (GP); ledit score de concordance correspondant à la somme de distances entre les noeuds et des points du graphe d'environnement (GP).

5. Procédé de localisation selon la revendication 3 dans lequel le premier vecteur de déplacement choisi (VD1) est déterminé en fonction de la distance entre le noeud de référence (N1) et un barycentre associé aux premiers vecteurs de déplacement déterminés et le deuxième vecteur de déplacement associé choisi (VD2) est choisi en fonction d'un angle de rotation du graphe de positionnement (GR) autour du noeud de référence (N1).

6. Procédé de localisation selon la revendication 3 dans lequel des valeurs de pondération (Ai) étant associées aux points d'ancrage (Pi), le premier et le second vecteurs de déplacement sont choisis en fonction desdites valeurs de pondération.

7. Procédé de localisation selon la revendication 6 dans lequel le procédé comporte en outre une étape de mise à jour d'au moins une des valeurs de pondération des points d'ancrage.

8. Procédé de localisation selon la revendication 7 dans lequel les étapes de réception, de calcul d'une géométrie (GR) et de détermination de position absolue sont réitérées avec les valeurs de pondération mises à jour.

9. Procédé de localisation selon la revendication 3 dans lequel le premier vecteur de déplacement est un vecteur de translation et le deuxième vecteur de déplacement est un vecteur de rotation et/ou de symétrie orthogonale.

10. Procédé de localisation selon la revendication 3 dans lequel la détermination du second vecteur de déplacement pour un point d'ancrage comprend:

une étape de positionnement du noeud de référence (N1) sur ledit point d'ancrage;
une étape de calcul d'un score d'ancrage représentatif d'une distance entre les noeuds et le graphe d'environnement (GP) pour plusieurs angles de rotation des noeuds autour du noeud de référence (N1) et/ou d'une distance entre les noeuds et le graphe d'environnement (GP) pour plusieurs angles de rotation des noeuds autour du noeud de référence après application d'une symétrie orthogonale audit graphe par rapport à un axe passant par le noeud de référence (NI); une étape de sélection d'un score d'ancrage parmi les scores obtenus et de l'angle de rotation associé.

11. Procédé de localisation selon la revendication 1 **caractérisé en ce qu'**il comprend en outre :

une étape de sélection, par le dispositif de localisation, d'une information relative à la position absolue déterminée pour un capteur du réseau de capteur;
une étape d'émission par le dispositif de localisation, de ladite information vers ledit capteur.

12. Dispositif de localisation (LOC) de capteurs d'un réseau de capteurs aptes à communiquer entre eux par liaison radio comprenant :

des moyens de réception (MCO), en provenance de capteurs du réseau de capteurs, de mesures de distances ($\delta_{ij}$) relatives entre des capteurs du réseau effectuées par des capteurs du réseau de capteurs;
un module de calcul (TOP) d'une géométrie (GR) relative du réseau de capteurs à partir des mesures de distance reçues, ladite géométrie comprenant des noeuds (NI, N2...) représentatifs de capteurs du réseau de capteurs;
**caractérisé en ce qu'**il comprend un module de détermination (DET) d'une position de ladite géométrie (GR) dans un plan d'environnement prédéfini (PE) du réseau de capteurs, ladite position prenant en compte des contraintes liées audit plan (PE) et d'au moins une position absolue d'au moins un capteur du réseau en fonction de la position de la géométrie (GR).

13. Système (SYS) comprenant une pluralité de capteurs (C1, C2...Cn) d'un réseau de capteurs aptes à communiquer entre eux par liaison radio et un dispositif selon la revendication 12.

14. Produit programme d'ordinateur comprenant des instructions pour mettre en oeuvre les étapes du procédé de localisation selon la revendication 1, lorsqu'il est chargé et exécuté par un processeur.

**Patentansprüche**

1. Verfahren zur Lokalisierung von Sensoren (C1, C2, ... Cn) eines Netzes von Sensoren, die miteinander durch Funkverbindung kommunizieren können, das die folgenden Schritte enthält, die von einer Lokalisierungsvorrichtung angewendet werden:

Empfang (E2), von Sensoren des Netzes von Sensoren kommend, von Messungen relativer Abstände ($\sigma_{ij}$) zwischen Sensoren des Netzes, die von Sensoren des Netzes von Sensoren ausgeführt werden;
Berechnung (E4) einer Geometrie (GR) des Netzes von Sensoren ausgehend von den empfangenen Abstandsmessungen, wobei die Geometrie (GR) Knoten (N1, N2, ...) enthält, die für Sensoren des Netzes von Sensoren repräsentativ sind;
**dadurch gekennzeichnet, dass** es einen Schritt der Bestimmung (E6), durch die Lokalisierungsvorrichtung, einer Position der Geometrie (GR) in einem vordefinierten Umgebungsplan (PE) des Netzes von Sensoren, wobei die Position mit der Ebene (PE) verbundene Zwänge berücksichtigt, und mindestens einer Absolutposition mindestens eines Sensor des Netzes abhängig von der Position der Geometrie (GR) enthält.

2. Lokalisierungsverfahren nach Anspruch 1, wobei die Zwänge in einem Umgebungsgraph (GP) spezifiziert sind, der eine Einheit von möglichen Absolutpositionen für einen Sensor in dem Umgebungsplan (PE) enthält.

3. Lokalisierungsverfahren nach Anspruch 2, wobei der Bestimmungsschritt enthält:

einen Schritt der Auswahl (E0) eines Bezugsknotens (N1) unter den Knoten der Geometrie;
einen Schritt der Auswahl von Verankerungspunkten (Pi) unter den Absolutpositionen des Umgebungsgraphs (GP);
einen Schritt der Bestimmung, pro Verankerungspunkt, eines ersten Verschiebungsvektors und eines zweiten Verschiebungsvektors, der dem ersten Verschiebungsvektor zugeordnet ist, wobei der erste Verschiebungsvektor abhängig vom Abstand zwischen dem Bezugsknoten (N1) und dem betrachteten Verankerungspunkt berechnet wird;
einen Schritt der Wahl eines ersten Verschiebungsvektors (VD1) und eines zweiten zugeordneten Verschiebungsvektors (VD2) unter den ersten und zweiten Vektoren, die abhängig von einem ersten vordefinierten Kriterium bestimmt werden;
einen Schritt der Anwendung des ersten gewählten Verschiebungsvektors (VD1) an die Einheit der Knoten und der Anwendung des zweiten gewählten Verschiebungsvektors (VD2) an die Knoten der Geometrie, die sich vom Bezugsknoten (N1) unterscheiden.

4. Lokalisierungsverfahren nach Anspruch 3, wobei das erste Kriterium ein Konkordanz-Score zwischen einer Absolutposition der Knoten, die durch Anwendung eines ersten und eines zweiten bestimmten Vektors erhalten wird, und dem Umgebungsgraph (GP) ist; wobei der Konkordanz-Score der Summe der Abstände zwischen den Knoten und den Punkten des Umgebungsgraphs (GP) entspricht.

5. Lokalisierungsverfahren nach Anspruch 3, wobei der erste gewählte Verschiebungsvektor (VD1) abhängig vom Abstand zwischen dem Bezugsknoten (N1) und einem den ersten bestimmten Verschiebungsvektoren zugeordneten Baryzentrum bestimmt wird, und der zweite gewählte zugeordnete Verschiebungsvektor (VD2) abhängig von einem Drehwinkel des Positionierungsgraphs (GR) um den Bezugsknoten (N1) herum gewählt wird.

6. Lokalisierungsverfahren nach Anspruch 3, wobei, wenn Gewichtungswerte (Ai) den Verankerungspunkten (Pi) zugeordnet sind, der erste und der zweite Verschiebungsvektor abhängig von den Gewichtungswerten gewählt werden.

7. Lokalisierungsverfahren nach Anspruch 6, wobei das Verfahren außerdem einen Schritt der Aktualisierung mindestens eines der Gewichtungswerte der Verankerungspunkte aufweist.

8. Lokalisierungsverfahren nach Anspruch 7, wobei die Schritte des Empfangs, der Berechnung einer Geometrie (GR) und der Absolutpositionsbestimmung mit den aktualisierten Gewichtungswerten wiederholt werden.

9. Lokalisierungsverfahren nach Anspruch 3, wobei der erste Verschiebungsvektor ein Translationsvektor und der zweite Verschiebungsvektor ein Drehvektor und/oder mit orthogonaler Symmetrie ist.

10. Lokalisierungsverfahren nach Anspruch 3, wobei die Bestimmung des zweiten Verschiebungsvektors für einen Verankerungspunkt enthält:

einen Schritt der Positionierung des Bezugsknotens (N1) auf dem Verankerungspunkt; einen Schritt der Berechnung eines Verankerungs-Scores, der für einen Abstand zwischen den Knoten und dem Umgebungsgraph (GP) für mehrere Drehwinkel der Knoten um den Bezugsknoten (N1) herum und/oder einen Abstand zwischen den Knoten und dem Umgebungsgraph (GP) für mehrere Drehwinkel der Knoten um den Bezugsknoten herum nach Anwendung einer Symmetrie orthogonal zum Graph bezüglich einer durch den Bezugsknoten (N1) verlaufenden Achse repräsentativ ist; einen Schritt der Auswahl eines Verankerungs-Scores unter den erhaltenen Scores und dem zugeordneten Drehwinkel.

11. Lokalisierungsverfahren nach Anspruch 1, **dadurch gekennzeichnet, dass** es außerdem enthält:

einen Schritt der Auswahl, durch die Lokalisierungsvorrichtung, einer Information bezüglich der bestimmten Absolutposition für einen Sensor des Netzes von Sensoren; einen Schritt des Sendens der Information zum Sensor durch die Lokalisierungsvorrichtung.

12. Vorrichtung zur Lokalisierung (LOC) von Sensoren eines Netzes von Sensoren, die miteinander durch Funkverbindung kommunizieren können, die enthält:

Einrichtungen zum Empfang (MCO), von Sensoren des Netzes von Sensoren kommend, von relativen Abstandsmessungen ($\sigma_{ij}$) zwischen Sensoren des Netzes, die von Sensoren des Netzes von Sensoren ausgeführt werden; ein Berechnungsmodul (TOP) einer relativen Geometrie (GR) des Netzes von Sensoren ausgehend von den empfangenen Abstandsmessungen, wobei die Geometrie Knoten (NI, N2, ...) enthält, die für Sensoren des Netzes von Sensoren repräsentativ sind; **dadurch gekennzeichnet, dass** sie ein Bestimmungsmodul (DET) einer Position der Geometrie (GR) in einem vordefinierten Umgebungsplan (PE) des Netzes von Sensoren enthält, wobei die Position mit der Ebene (PE) verbundene Zwänge und mindestens eine Absolutposition mindestens eines Sensors des Netzes abhängig von der Position der Geometrie (GR) berücksichtigt.

13. System (SYS), das eine Vielzahl von Sensoren (C1, C2 ..., Cn) eines Netzes von Sensoren, die durch Funkverbindung miteinander kommunizieren können, und eine Vorrichtung nach Anspruch 12 enthält.

14. Computerprogrammprodukt, das Anweisungen enthält, um die Schritte des Lokalisierungsverfahrens nach Anspruch 1 anzuwenden, wenn es von einem Prozessor geladen und ausgeführt wird.

**Claims**

1. Method of locating sensors (C1, C2...Cn) of a network of sensors able to communicate with one an-

**9**

other by radio link, comprising the following steps, implemented by a locating device:

>  reception (E2), originating from sensors of the network of sensors, of measurements of relative distances ($\delta_{ij}$) between sensors of the network that are performed by sensors of the network of sensors;
>  calculation (E4) of a geometry (GR) of the network of sensors on the basis of the distance measurements received, said geometry (GR) comprising nodes (N1, N2, ...) representative of sensors of the network of sensors;
>  **characterized in that** it comprises a step (E6) of determining, by the locating device, a position of said geometry (GR) in a predefined environment plane (PE) of the network of sensors, said position taking into account constraints related to said plane (PE), and at least one absolute position of at least one sensor of the network as a function of the position of the geometry (GR).

2. Locating method according to Claim 1, in which the constraints are specified in an environment graph (GP) comprising a set of possible absolute positions for a sensor in the environment plane (PE).

3. Locating method according to Claim 2, in which the determining step comprises:

>  a step (E0) of selecting a reference node (N1) from among the nodes of the geometry;
>  a step of selecting anchorage points (Pi) from among the absolute positions of the environment graph (GP);
>  a step of determining, per anchorage point, a first displacement vector and a second displacement vector associated with said first displacement vector, the first displacement vector being calculated as a function of the distance between said reference node (N1) and the anchorage point considered;
>  a step of choosing a first displacement vector (VD1) and an associated second displacement vector (VD2) from among the first and second vectors determined as a function of a first predefined criterion;
>  a step of applying the first chosen displacement vector (VD1) to the set of nodes and of applying the second chosen displacement vector (VD2) to the nodes of the geometry other than the reference node (N1).

4. Locating method according to Claim 3, in which the first criterion is a score of agreement between an absolute position of the nodes which is obtained by applying a first and a second determined vector and the environment graph (GP); said agreement score corresponding to the sum of distances between the nodes and points of the environment graph (GP).

5. Locating method according to Claim 3, in which the first chosen displacement vector (VD1) is determined as a function of the distance between the reference node (N1) and a barycentre associated with the first displacement vectors determined and the associated second chosen displacement vector (VD2) is chosen as a function of an angle of rotation of the positioning graph (GR) around the reference node (N1).

6. Locating method according to Claim 3, in which weighting values (Ai) being associated with the anchorage points (Pi), the first and second displacement vectors are chosen as a function of said weighting values.

7. Locating method according to Claim 6, in which the method furthermore comprises a step of updating at least one of the weighting values of the anchorage points.

8. Locating method according to Claim 7, in which the steps of receiving, of calculating a geometry (GR) and of determining absolute position are repeated with the updated weighting values.

9. Locating method according to Claim 3, in which the first displacement vector is a translation vector and the second displacement vector is a rotation vector and/or orthogonal symmetry vector.

10. Locating method according to Claim 3, in which the determining of the second displacement vector for an anchorage point comprises:

>  a step of positioning the reference node (N1) on said anchorage point;
>  a step of calculating an anchorage score representative of a distance between the nodes and the environment graph (GP) for several angles of rotation of the nodes around the reference node (N1) and/or a distance between the nodes and the environment graph (GP) for several angles of rotation of the nodes around the reference node after applying an orthogonal symmetry to said graph with respect to an axis passing through the reference node (N1);
>  a step of selecting an anchorage score, from among the scores obtained, and the associated angle of rotation.

11. Locating method according to Claim 1, **characterized in that** it furthermore comprises:

>  a step of selecting, by the locating device, an item of information relating to the absolute position determined for a sensor of the sensor network;

a step of sending by the locating device, said item of information to said sensor.

12. Device (LOC) for locating sensors of a network of sensors able to communicate with one another by radio link comprising:

means (MCO) for receiving, originating from sensors of the network of sensors, measurements of relative distances ($\delta_{ij}$) between sensors of the network that are performed by sensors of the network of sensors;

a module (TOP) for calculating a relative geometry (GR) of the network of sensors on the basis of the distance measurements received, said geometry comprising nodes (N1, N2, ...) representative of sensors of the network of sensors; **characterized in that** it comprises a module (DET) for determining a position of said geometry (GR) in a predefined environment plane (PE) of the network of sensors, said position taking into account constraints related to said plane (PE) and at least one absolute position of at least one sensor of the network as a function of the position of the geometry (GR).

13. System (SYS) comprising a plurality of sensors (C1, C2...Cn) of a network of sensors able to communicate with one another by radio link and a device according to Claim 12.

14. Computer program product comprising instructions for implementing the steps of the locating method according to Claim 1, when it is loaded and executed by a processor.

Figure 1

Figure 2

Figure 5

**Figure 3**

**Figure 4**

Figure 6

Figure 7

**EP 2 553 486 B1**

## RÉFÉRENCES CITÉES DANS LA DESCRIPTION

**Documents brevets cités dans la description**

- JP 2006090868 A
- US 20090128412 A